# EUROPÄISCHE PATENTSCHRIFT

(11) **EP 2 542 512 B1**
(45) Veröffentlichungstag und Bekanntmachung des Hinweises auf die Patenterteilung: **23.11.2016**
(21) Anmeldenummer: 11714911.2
(22) Anmeldetag: 03.03.2011
(51) Int. Cl.: C04B 28/06, C04B 38/10, C09K 21/00

(54) **MINERALSCHAUM UND VERFAHREN ZU SEINER HERSTELLUNG**
MINERAL FOAM AND METHOD FOR ITS PRODUCTION
MOUSSE MINÉRALE ET PROCÉDÉ POUR SA FABRICATION

(30) Priorität: 04.03.2010 AT 3412010
(43) Veröffentlichungstag der Anmeldung: 09.01.2013
(73) Patentinhaber: Geolyth Mineral Technologie GmbH, 4050 Traun (AT)
(72) Erfinder: DUCIA, Falco, A-2100 Stetten (AT)
(74) Vertreter: Burger, Hannes
(86) Internationale Anmeldenummer: PCT/AT2011/000106
(87) Internationale Veröffentlichungsnummer: WO 2011/106816

(56) Entgegenhaltungen:
- EP-A1- 0 628 523
- WO-A1-2011/044604
- WO-A1-2011/044605
- DE-B1- 2 617 153
- D. LAWRENCE: "9. The Production of Low-EnergyCements; 9.5.3. Belite-Aluminate and -Sulphoaluminate Cements" In: P.HEWLETT: "Lea's Chemistry of Cement & Concrete", 1. Januar 1998 (1998-01-01), Butterworth Heinemann, Oxford, XP002639760, ISBN: 0340565896 Seiten 447-449, Seite 447 - Seite 449
- "2.8.5 Schnellzemente" In: J.Stark & B.Wicht: "Zement & Kalk", 1. Januar 2000 (2000-01-01), BAUPRAXIS Birkhäuser, Basel Boston, XP002639761, ISBN: 3764362162 Seite 141 - Seite 143

## Beschreibung

Die Erfindung betrifft eine Formulierung zur Herstellung eines brandhemmenden Mineralschaums umfassend einen Calzium-Sulfat-Aluminat-Zement, eine Sulfatkomponente, ein Aluminiumsilikat sowie eine Calciumoxid bereitstellende Komponente, einen Poren aufweisenden Mineralschaum umfassend eine hydraulisch abbindende Komponente und eine Schaumkomponente, ein Bauelement mit einem Bauelementkörper sowie ein Verfahren zur Herstellung eines selbsthärtenden Mineralschaums nach dem pulverförmige Bestandteile zur Herstellung einer Formulierung in einer ersten Mischstrecke zu einem Gemenge miteinander vermischt werden und diesem Gemenge Wasser zur Bildung eines Slurry zugesetzt wird.

Bauelemente aus Mineralschäumen sind bereits aus dem Stand der Technik für verschiedenste Verwendungszwecke bekannt. Beispielsweise werden Mineralschäume für die Wärmedämmung von Gebäuden verwendet. Wärmedämmungen an sich sind aus dem Stand der Technik vielfach und in unterschiedlichsten Ausführungen bekannt. Im Wesentlichen kann zwischen anorganisch basierenden und organisch basierenden Dämmstoffen unterschieden werden. Beiden gemeinsam ist, dass im Wesentlichen versucht wird, durch ein möglichst großes "Porenvolumen" die Wärmeleitung durch den Dämmstoff zu reduzieren. Organisch basierende Dämmstoffe haben gegenüber anorganisch basierenden Dämmstoffen den Vorteil, dass sie in der Regel ein deutlich geringeres Raumgewicht aufweisen und verfahrenstechnisch einfacher herstellbar sind.

Aus dem Stand der Technik sind aber auch bereits mineralische Dämmstoffe mit geringem Raumgewicht bekannt. So ist z.B. aus der EP 0 628 523 A1 ein Verfahren zur Herstellung eines Wärmedämmmaterials aus Quarzmehl mit einer spezifischen Oberfläche nach BET von mindestens etwa 3 m²/g, Kalkhydrat, Wasser, Schaum und einem, reaktive Aluminate enthaltenden Schnellzement bekannt, bei dem das Wärmedämmmaterial eine Rohdichte von weniger als 250 kg/m³ aufweist. Aus den Rohstoffen wird dabei eine gießfähige Rohmischung hergestellt, die in Formen gegossen wird. Die Rohmischung wird in Abhängigkeit von der Gesamtoberfläche der Feststoffe mit einem Gewichtsverhältnis von Wasser/Feststoff (ohne Schaum) von mindestens etwa 1,25 bis etwa 1,85 und einer in Bezug auf den praktisch vollständigen Umsatz des Quarzmehls und der reaktiven Aluminate im Wesentlichen stöchiometrischen Menge an Kalkhydrat mit einer Oberfläche nach BET von mindestens etwa 15 m²/g hergestellt. Die in Formen gegossenen Rohlinge werden nach genügender Verfestigung bis auf einen Formboden entformt und auf dem Formboden befindlich autoklaviert. Als Schaum wird ein Tensid- oder ein Proteinschaum verwendet.

Neben dem Raumgewicht sind aber auch die Brandhemmungseigenschaften eines Dämmstoffes in Hinblick auf dessen Eignung als Dämmstoff im Bauwesen von Bedeutung.

Aus der DE 26 17 153 B1 ist ein Verfahren zur Herstellung leichtgewichtiger Schaumbetonkörper bekannt. Dabei werden kontinuierlich mit festgelegten Fließgeschwindigkeiten getrennt zwei verschiedene Massen, von denen eine aus einer rasch abbindenden hydraulischen Zementmasse in Form eines feinteiligen trockenen Pulvers und die andere aus einer ein Treibmittel und ein Abbindehemmittel enthaltenden wässrigen aufgeschäumten Flüssigkeit besteht, in ein kontinuierlich gerührtes Gefäß eingeführt, die hierbei gebildete aufgeschäumte Zementaufschlämmung kontinuierlich aus dem Gefäß ausgetragen, bevor die aufgeschäumte Zementaufschlämmung abzubinden beginnt, und dann die aufgeschäumte Aufschlämmung zur Herstellung von Gießlingen in eine Form gefüllt. Es kann eine Bindemittelmischung verwendet werden, die aus 100 Teilen Portlandzement, 25 Teilen Tonerdezement, 42 Teilen Siliziumdioxid und 5 Teilen Calciumhydroxid besteht.

Aufgabe vorliegender Erfindung ist es, einen mineralischen Dämmstoff zu schaffen, der geringes Eigengewicht und gute Brandhemmungseigenschaften aufweist.

Diese Aufgabe der Erfindung wird jeweils eigenständig gelöst durch die eingangs genannte Formulierung, bei der der Calzium-Sulfat-Aluminat-Zement in einem Anteil ausgewählt aus einem Bereich von 55 Gewichtsteilen und 85 Gewichtsteilen enthalten ist, die Sulfatkomponente in einem Anteil enthalten ist, dass ein Sulfatanteil zwischen 5 Gewichtsteilen und 15 Gewichtsteilen beträgt, das Aluminiumsilikat in einem Anteil enthalten ist, dass der Al₂O₃ - Anteil zwischen 3 Gewichtsteilen und 30 Gewichtsteilen beträgt, und die Calciumoxid bereitstellende Komponente in einem Anteil enthalten ist, dass der CaO-Anteil zwischen 0,5 Gewichtsteilen und 2 Gewichtsteilen beträgt, durch einen Mineralschaum, der aus mit dieser Formulierung hergestellt worden ist, durch ein, den Mineralschaum aufweisendes Bauelement, sowie durch das eingangs genannte Verfahren, nach dem die Formulierung in der erfindungsgemäßen Zusammensetzung gemischt wird und dem Slurry in einer zweiten Mischstrecke eine Schaumkomponente zugesetzt und in den Slurry eingemischt wird, und danach der Mineralschaum erhärtet wird.

Mit der neuen Formulierung kann gemäß dem Verfahren ein Mineralschaum hergestellt werden, der bis zumindest 1000 °C brandhemmend wirkt bzw. Brandschutzeigenschaften aufweist. Zudem kann damit der Vorteil erreicht werden, dass der Mineralschaum ohne erforderliche Autoklavierung hergestellt werden kann, wodurch das Verfahren vereinfacht und Kosten gesenkt werden können. Durch die Verwendung des Calzium-Sulfat-Aluminat-Zements wird zudem der Vorteil erreicht, dass der Mineralschaum während des Erhärtens nicht bzw. nicht wesentlich schwindet. Es wird damit erreicht, dass der Mineralschaum bzw. damit versehene oder daraus gebildete Bauelemente einfacher herstellbar sind, indem auf ein Schwundmaß nicht Rücksicht genommen werden muss.

Vorzugsweise beträgt der Anteil des Calzium-Sulfat-Aluminat-Zements an der Formulierung zumindest 60 Gewichtsteile, insbesondere zumindest 70 Gewichtsteile, wodurch die mechanischen Eigenschaften und die Dämmeigenschaften weiter verbessert werden können.

Vorzugsweise ist die Sulfatkomponente ausgewählt ist aus einer Gruppe umfassend Calziumsulfat, α- oder β- Halbhydrat oder Dihydrat von Calziumsulfat, Anhydrit, Natriumsulfat, Eisen-(II)-sulfat, Magnesiumsulfat sowie Mischungen und Derivate daraus. Es werden damit Hydratphasen während der Erhärtung des Dämmstoffes erzeugt, die im Laufe der Zeit einer Phasenumwandlung unterliegen, wobei die Festigkeit zunimmt.

Das Aluminiumsilikat ist bevorzugt ein alkalisch aktivierbares Aluminiumsilikat, insbesondere ein vulkanisches Aluminiumsilikat, vorzugsweise Basalt, Pechstein, Obsidian, Phonolith, und/oder Metakaolin, sowie Mischungen und Derivate daraus. Es kann damit das Erstarrungsverhalten und die Abbindezeit positiv beeinflusst werden. Beispielsweise kann damit die Abbindezeit des Slurry so eingestellt werden, dass die Gefahr verringert wird, dass der zugegebene Schaum zusammenfällt und damit die Porosität des Dämmstoffes verringert wird. Es kann damit also die Verarbeitung vereinfacht werden.

Zur weiteren Verbesserung wird vorzugsweise ein Basalt verwendet, der einen Gehalt an Zeolith und/oder einem Puzzolan aufweist. Der Gehalt an Zeolith und/oder Puzzolan kann dabei bis zu 40 Gew.-% betragen, insbesondere bis zu 30 Gew.-%. Es wird damit die alkalische Aktivierbarkeit des Aluminiumsilikats verbessert werden. Zudem wirkt insbesondere der Zeolith hinsichtlich der brandhemmenden Eigenschaften des Mineralschaums unterstützend.

In einer bevorzugten Ausführungsvariante dazu wird das Aluminiumsilikat in kalzinierter Form eingesetzt, wodurch dessen Reaktivität und damit das Abbindeverhalten des Slurry/Schaum Gemisches verbessert werden können.

Die Calciumoxid bereitstellende Komponente ist vorzugsweise ausgewählt aus einer Gruppe umfassend Calziumoxid, Calziumcarbonat und Calziumhydroxid, sowie Mischungen daraus, wobei wegen der entsäuernden Wirkung besonders bevorzugt Calziumhydroxid verwendet wird. Es kann damit das Quellverhalten der Formulierung verbessert werden.

Die Formulierung kann weiters zumindest einen so genannten Hochleitstungsverflüssiger enthalten um das rheologische Verhalten des aus der Formulierung gebildeten Slurry zu beeinflussen, wobei der Anteil auf maximal 3 Gewichtsteile beschränkt ist. Der Hochleistungsverflüssiger ist ein Polycarboxylatether bzw. ein Derivat hiervon, um damit den Wasseranteil des Slurry reduzieren zu können, da aus der Schaumkomponente, die dem Slurry zugesetzt wird, ebenfalls Wasser in das System eingetragen wird, das für das Abbinden des Mineralschaums zur Verfügung steht.

Es ist weiters möglich, dass der Formulierung zur Stabilisierung des Slurry und damit zur besseren Verarbeitbarkeit des Slurry zumindest ein Verdickungsmittel in einem Anteil von maximal 0,5 Gewichtsteilen zugesetzt wird. Vorzugsweise ist das Verdickungsmittel in einem Anteil von maximal 0,25 Gewichtsteilen, insbesondere maximal 0,02 Gewichtsteilen, zugesetzt. Das Verdickungsmittel ist ausgewählt aus einer Gruppe umfassend Hydroxymethylpropylcellulose, Methylhydroxyethylcellulose sowie Mischungen und Derivate daraus, da damit im Rahmen der durchgeführten Tests für die Erfindung gefunden wurde, dass diese Verdickungsmittel in Hinblick auf Verarbeitung bessere Eigenschaften, wie z.B. die Rheologie, die Dispergierung der Feststoffe, oder den Wasserbedarf und das Wasserrückhaltevermögen aufwiesen.

In Hinblick auf die Verarbeitbarkeit des Slurry wurde auch gefunden, dass Verbesserungen eintreten, wenn der Anteil des Verdickungsmittels maximal 70 % des Anteils des Hochleistungsverflüssigers beträgt.

Es ist von Vorteil, wenn die Formulierung (und damit auch der Mineralschaum) faserfrei ausgeführt ist, da damit ein homogenerer Aufbau des Schaumkörpers ermöglicht wird und eine Richtungsabhängigkeit von Eigenschaften des Mineralschaums besser vermieden werden kann. Als Nebeneffekt wird damit auch die Herstellung des Mineralschaums vereinfacht, indem keine umweltrelevanten Beeinträchtigungen durch Fasern während der Herstellung des Mineralschaums auftreten. Es ist jedoch prinzipiell möglich, dass Fasern zugesetzt werden.

Der Formulierung kann zur Verbesserung der Rheologie zumindest ein Stoff aus einer Gruppe umfassend ein Alkalikarbonate, Alkalisulfate, Fruchtsäuren zugesetzt sein, beispielsweise als Verzögerer.

Um den Anteil an Sorptionsfeuchte in dem fertigen Mineralschaum zu reduzieren und damit die Wärmedämmung (λ-Wert) zu verbessern, kann vorgesehen werden, dass zumindest ein Hydrophobierungsmittel zugesetzt wird, insbesondere zur Massehydrophobierung der Formulierung. Der Anteil des Hydrophobierungsmittels an der Formulierung kann dabei bis zu 3 Gewichtsteile, vorzugsweise bis zu 1 Gewichtsteil, betragen.

Gemäß einer anderen Ausführungsvariante der Formulierung kann vorgesehen sein, dass diese zuschlagstofffrei, d.h. füllstofffrei ist, also keine nichtreaktiven Bestandteile enthält, wodurch das Raumgewicht des Mineralschaums weiter gesenkt werden konnte.

Vorzugsweise ist die Schaumkomponente zur Herstellung des Mineralschaums durch einen Proteinschaum und/oder einen Tensidschaum gebildet. Es kann damit das Schäumungsverhalten besser kontrolliert werden als bei der Methode des direkten Aufschäumens mit einem Treibmittel. Insbesondere die Porengröße und die Porenverteilung kann damit beeinflusst werden, und können damit der Wärmeleitwert bzw. das Schallabsorptionsvermögen des Mineralschaums sowie das Brandhemmungsverhalten besser eingestellt werden.

Vorzugsweise sind pro Anteil Formulierung zwischen 30 und 60 Anteile Schaumkomponente enthalten, insbesondere zwischen 40 und 50 Anteile Schaumkomponente, da damit eine höhere Porosität des Mineralschaums erreicht werden kann, und somit das Raumgewicht des Mineralschaums bei gleichzeitig hohen Brandhemmungseigenschaften herabgesetzt werden kann.

Zur Stabilisierung des Schaums während des Einmischens in den Slurry aus der Formulierung mit Wasser kann der Schaumkomponente zumindest ein oberflächenaktives (grenzflächenaktives) Mittel zugesetzt werden, wobei das oberflächenaktive Mittel ausgewählt ist aus einer Gruppe umfassend Fettsäuren und Alkylsulfonate sowie Derivate davon und Mischung daraus, da mit diesen Stoffen eine Verbesserung der Schaumstabilisierung beobachtet werden konnte.

Es ist auch möglich, dass die Schaumkomponente ein pflanzliches Eiweiß als Vernetzer enthält, wobei der Vernetzer bevorzugt in einem Anteil zwischen 1 % und 3 %, insbesondere in einem Anteil zwischen 1,2 % und 2,3 %, des Gewichts der hydraulisch abbindenden Komponente am Mineralschaum enthalten ist. Es kann damit die Ausbildung des Mineralschaums verbessert, insbesondere beschleunigt werden, wobei auch die Stabilität des gebildeten Schaums während des Abbindens des hydraulischen Bindemittels verbessert werden kann.

Gemäß einer bevorzugten Ausführungsvariante weist der Mineralschaum einen Porenanteil von zumindest 70 %, insbesondere zwischen 80 % und 95 % auf. Durch diesen hohen Anteil an Poren kann nicht nur das Dämmverhalten an sich verbessert werden, sondern ist damit auch ein geringeres Raumgewicht des Mineralschaums erreichbar.

Dabei weisen die Poren vorzugsweise einen Durchmesser von maximal 0,5 mm, insbesondere maximal 0,25 mm bzw. maximal 0,1 mm, auf, um einerseits ein positives Dämmverhalten zu erreichen und um andererseits die mechanische Stabilität des fertigen Mineralschaums zu verbessern. Insbesondere kann durch möglichst kleine Poren eine Verringerung des Wärmeverlustes durch Wärmeleitung erreicht werden.

Eine weitere Verbesserung der Wärmedämmeigenschaften des Mineralschaums kann erreicht werden, wenn diesem IR-Trübungsmittel, beispielsweise infrarotaktive Oxide oder Carbide, wie z.B. SiC, oder C, zugesetzt werden. Der Anteil der IR-Trübungsmittel kann bis maximal 5 Gewichtsteile betragen. Es kann damit der Wärmeverlust, der durch Wärmestrahlung entsteht, reduziert werden.

Es können der Schaumkomponente auch Luftporenbilder, wie z.B. Alkylpolyglykolether, Alkylsulfate oder -sulfonate, zugesetzt werden, u.a. um die Stabilität des Schaums zu verbessern.

Es kann vorgesehen sein, dass die Schaumkomponente vor dem Zusetzen zu dem Slurry in einem Schaumgenerator mit Wasser und gegebenenfalls Verarbeitungshilfsstoffen versetzt wird, wodurch deren Verarbeitbarkeit, insbesondere die Stabilität des Schaums während des Vermischens mit dem Slurry, verbessert werden kann. Es kann dazu in der Vorrichtung zur Aufschäumung der Schaumkomponente ein Schaumgenerator angeordnet sein, in dem ein mit Wasser versetztes Protein mit einem Gas, insbesondere Luft, aufgeschäumt wird.

Zum besseren Verständnis der Erfindung wird diese anhand der nachfolgenden Figur näher erläutert.

Es zeigt in schematisch vereinfachter Darstellung:

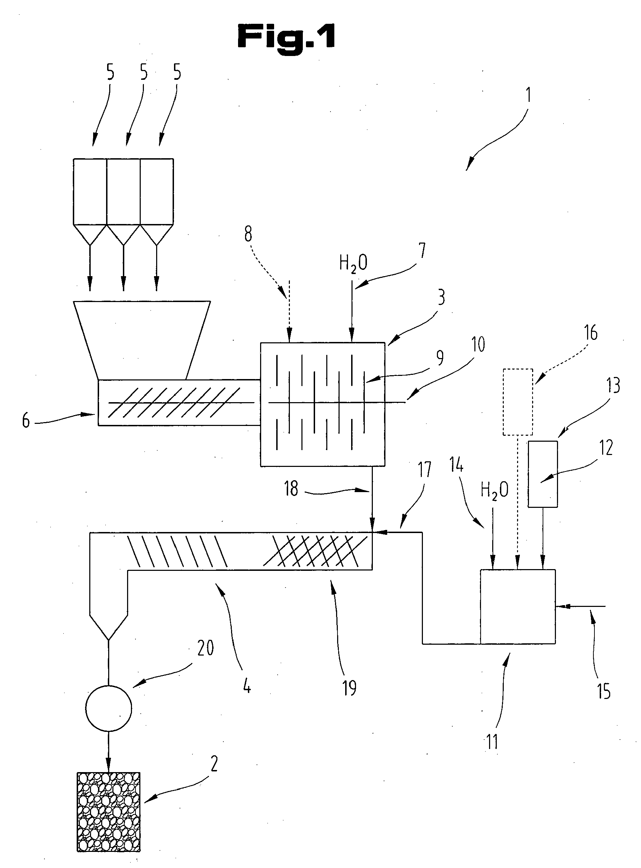

- Fig. 1: eine Vorrichtung zur Herstellung eines selbsthärtenden Mineralschaums.

Einführend sei festgehalten, dass die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Fig. 1 zeigt eine bevorzugte Vorrichtung 1 zur Herstellung eines selbsthärtenden, brandhemmenden Mineralschaums 2.

Unter einem Mineralschaum 2 wird ein Poren aufweisender Baustoff verstanden, der mit einem hydraulisch abbindenden Bindemittel hergestellt ist. Vorzugsweise enthält dieser großteils nur mineralische Bestandteile, wobei Verarbeitungshilfsstoffe auch organischer Natur sein können.

Einer der wesentlichsten Vorteile der Erfindung ist darin zu sehen, dass der Mineralschaum 2 nicht autoklaviert werden muss, wie dies aus dem Stand der Technik bekannt ist. Dazu weist die Vorrichtung 1 im Kern der Erfindung eine erste Mischstrecke 3 sowie eine dieser in Produktionsrichtung nachgeordnete, zweite Mischstrecke 4 auf. In der ersten Mischstrecke 3 wird aus pulverförmigen Komponenten einer Formulierung zur Herstellung des Mineralschaums 2, welche beispielsweise in Vorratsbehältern 5 vorrätig gehalten werden können, und die über eine Fördervorrichtung 6, beispielsweise eine Förderschnecke, der ersten Mischstrecke 3 zugeführt werden, unter Zusatz von Wasser entsprechend Pfeil 7 ein so genannter Slurry, also eine Mischung aus den festen Komponenten und Wasser, hergestellt. Als Wasser wird üblicherweise normales Leitungswasser verwendet, wobei selbstverständlich auch destilliertes bzw. entionisiertes oder gereinigtes Wasser eingesetzt werden kann. Gegebenenfalls können weitere Zusatzstoffe zur Vermengung mit den pulverförmigen Bestandteilen in die erste Mischstrecke 3 aufgegeben werden, wie dies durch einen strichlierten Pfeil 8 in Fig. 1 angedeutet ist, wobei zumindest einzelne der Zusatzstoffe auch in flüssiger oder dispergierter Form zugesetzt werden können.

Es besteht die Möglichkeit, dass die Vermengung der pulverförmigen Bestandteile vor der Zugabe des Wassers gemäß Pfeil 7 erfolgt, das heißt, dass zu den Hauptkomponenten der Formulierung zur Herstellung des Mineralschaums 2 bereits diese Hilfsstoffe bzw. Verarbeitungshilfen zugesetzt und gegebenenfalls diese pulverförmigen Komponenten der Formulierung vorgemischt werden können.

Die Mischstrecke 3 ist als Paddel-Mischer oder Pflugschaufelmischer ausgebildet, wobei auch anderer Mischertypen, wie z.B. Freifallmischer, verwendet werden können. Erstgenannte Mischertypen haben jedoch den Vorteil, dass weniger Wasser zugesetzt werden muss - Ziel ist es möglichst wenig Wasser zu verwenden - und dass der Energieverbrauch pro m³ Slurry relativ gering ist. Zudem kann die Gefahr der Verklebung des Mischers durch diese gerundeten Formen reduziert werden. Insbesondere kann diese Mischstrecke 3 Mischorgane 9 aufweisen, die in radialer Richtung versetzt an einer Mischstreckenwelle 10 angeordnet sind. Es können dabei in der Mischstrecke 3 zwischen 2 und 20 Mischorgane 9 angeordnet werden. Insbesondere wird die Mischstreckenwelle 10 mit einer zur Fördervorrichtung 6 unterschiedlichen Drehzahl betrieben.

Diesem Slurry wird in der Folge ein Proteinschaum und/oder ein Tensidschaum als Schaumkomponente zugesetzt, der in einem Schaumgenerator 11 erzeugt wird. Es wird also der Mineralschaum 2, d.h. die Formulierung für den Mineralschaum 2 nach der Erfindung nicht direkt aufgeschäumt sondern erfolgt die Porenbildung des Mineralschaums 2 durch den Zusatz eines eigenen Schaums. Als Schaumkomponente wird dazu ein Proteinschaum und/oder ein Tensidschaum verwendet. Als Protein 12, welches in einem entsprechenden Vorratsbehälter 13 vorrätig gehalten werden kann, wird ein tierisches oder ein pflanzliches Protein oder werden Mischungen daraus verwendet. Insbesondere wird als Protein 12 ein Keratin, vorzugsweise ein hydrolysiertes Keratin, eingesetzt, das vorzugsweise alkaliresistent ist. Das Protein kann in einer Menge von bis zu 15 Gewichtsteilen, insbesondere bis zu 10 Gewichtsteilen, eingesetzt werden.

Diesem Protein 12 wird wiederum Wasser, insbesondere destilliertes bzw. gereinigtes Wasser, gemäß Pfeil 14 zugesetzt und wird im Schaumgenerator 11 durch das Einblasen von Luft gemäß Pfeil 15 der Proteinschaum erzeugt.

Wie strichliert im Bereich des Schaumgenerators 11 in Fig. 1 dargestellt, können dieser Schaumkomponente ebenfalls Verarbeitungshilfsstoffe, z.B. aus einem Vorratsbehälter 16, zugesetzt werden, wobei es auch möglich ist, dass, für den Fall dass mehrere Verarbeitungshilfsstoffe zugesetzt werden, vorab eine Vermischung dieser Hilfsstoffe erfolgt.

Generell sei angemerkt, dass diese Verarbeitungshilfsstoffe für den Zusatz zur Schaumkomponente pulverförmig oder in gelöster bzw. dispergierter Form zugesetzt werden können.

Die fertige Schaumkomponente wird in der Folge gemäß Pfeil 17 dem aus der ersten Mischstrecke 3 stammenden Slurry gemäß Pfeil 18 zugesetzt, wobei die Zugabe in der zweiten Mischstrecke 4 oder bevorzugt vor der zweiten Mischstrecke 4 erfolgt. Dazu kann dieser Mischstrecke 4 eine Fördervorrichtung 19, z.B. eine Förderschnecke, vorgeordnet sein, wobei es in diesem Fall möglich ist, dass vorerst der Schaum in die Fördervorrichtung 19 eingeführt wird, sodass diese zumindest annähernd vollständig mit dieser gefüllt ist, und danach der Slurry in den Schaum gegeben wird, insbesondere schrittweise, wobei auch mehrere Einfüllöffnungen für den Slurry in die Fördervorrichtung 19 vorhanden sein können. Es ist aber abweichend oder zusätzlich dazu möglich, dass der Slurry erst in der zweiten Mischstrecke 4 dem Schaum zugemischt wird.

Die zweite Mischstrecke 4 ist insbesondere als Paddel-, Schrauben-, Wendelmischer oder statischer Mischer oder in Form einer Kombination aus den oder einzelnen dieser Mischertypen ausgebildet.

Im Rahmen der Erfindung besteht die Möglichkeit, dass die beiden Mischstrecken 3, 4 in einem einzigen Mischer kombiniert sind, wobei sie auch in diesem Fall voneinander getrennt sind, also hintereinander in diesem Mischer ausgebildet sind.

Es besteht weiters die Möglichkeit, dass die erste und/oder zweite Mischstrecke 3, 4 aus einer getrennten Fördervorrichtung 6 bzw. 19 und einem getrennten Mischer bestehen, wobei die Trennung auch lediglich so aussehen kann, dass diese getrennte Antriebe aufweisen, um unterschiedliche Drehzahlen und damit ein besseres Mischergebnis bei möglichst geringem Energieeinsatz zu ermöglichen.

In der Folge wird über eine entsprechende Fördereinrichtung 20 das fertige Gemisch aus dem Slurry und der Schaumkomponente aus der zweiten Mischstrecke 4 abgezogen und kann dieses Gemisch in eine entsprechende Form eingefüllt werden, um darin die Selbstaushärtung des Mineralschaums 2 durch die entsprechend ablaufenden, chemischen Reaktionen zu ermöglichen.

Es sei darauf hingewiesen, dass der Mineralschaum 2, nach der Erfindung beispielsweise in Plattenform, zum nachträglichen Aufbringen auf zu Bauwerksteile, wie zum Beispiel Wände, ausgebildet sein kann, ebenso besteht die Möglichkeit, dass mit dem Gemenge Bauelemente, beispielsweise (Hohlkammer)ziegel, zumindest teilweise gefüllt werden, sodass also in sich gedämmte Bauelemente, beispielsweise mit einer Wärmedämmung versehene Ziegel oder Steine, hergestellt werden können. Es sind aber auch andere Formen des Mineralschaums 2 möglich, wie z.B. Steine, Sanitärelemente, Elemente im Bereich des Fußbodens, beispielsweise bei Fußbodenheizungen, etc.. Insbesondere wird der Mineralschaum 2 als brandhemmender Baustoff verwendet, der auch entsprechende Wärmedämmeigenschaften aufweist. Es können damit z.B. aus Steine für den Kaminbau gefertigt werden. Ebenso sind Füllungen von Bauelementen möglich, die nicht primär der Wärmedämmung dienen sondern der Brandhemmung.

Obwohl in Fig. 1 nicht dargestellt, besteht im Rahmen der Erfindung die Möglichkeit, dass entsprechende Regel- und/oder Steuerorgane und/oder Messorgane innerhalb der Vorrichtung 1 vorhanden sind und können diese Regel- und/oder Steuerorgane und/oder Messorgane selbstverständlich auch EDV-unterstützt betrieben werden.

Es besteht weiters die Möglichkeit, dass zur Herstellung des Schaums anstelle von Luft auch andere Gase, wie z.B. N₂, CO₂, etc., verwendet werden. Des Weiteren besteht die Möglichkeit, dass dem Protein ein, insbesondere alkalisches, Treibmittel zugesetzt wird, sodass auf die Zugabe eines gesonderten Gases für das Aufschäumen des Proteins verzichtet werden kann oder die Gasmenge reduziert werden kann.

Vorzugsweise weist die Schaumkomponente auch zumindest einen Vernetzer auf, der insbesondere durch ein pflanzliches Eiweiß, beispielsweise Transglutaminase, gebildet ist, wenn die Schaumkomponente durch einen Proteinschaum gebildet wird.

Es sei an dieser Stelle angemerkt, dass die gewählte Anzahl der Mischorgane 9 in der ersten Mischstrecke 3, wie voran stehend ausgeführt, Vorteile im Hinblick auf die Produkteigenschaften des Mineralschaums 2 hat. Zwar kann mit einer geringeren oder höheren Anzahl an Mischstäben 9 ebenfalls ein Mineralschaum 2, das heißt ein Slurry, hergestellt werden, allerdings wurde im Rahmen der Erprobung der Erfindung gefunden, dass mit einer Anzahl an Mischorganen 9 aus dem angegebenen Bereich die Produkteigenschaften des Mineralschaums 2 verbessert sind. Es sei dabei darauf hingewiesen, dass die Anzahl der Mischorgane 9 auf eine bestimmte Große der Vorrichtung 1 bezogen ist, das heißt auf einen bestimmten Volumenausstoß an Mineralschaum 2, der bis zu 50 m³/h beträgt. Es ist daher möglich, wenngleich noch nicht ausgetestet, dass eine von der angegebenen Anzahl von Mischorganen 9 abweichende Anzahl bei einer anderen Auslegung der Anlage 1 von Vorteil ist.

Des Weiteren wurde im Rahmen der Erfindung gefunden, dass eine Umfangsgeschwindigkeit ausgewählt aus einem Bereich mit einer unteren Grenze von 4 m/s, insbesondere 5,5 m/s, und einer oberen Grenze von 12 m/s, insbesondere 11 m/s, mit der die Mischstreckenwelle 10 der Mischstrecke 3 betrieben wird, für das angegebene Produktionsvolumen ebenfalls Vorteile in Hinblick auf die Produkteigenschaften des Mineralschaums 2 hat. Insbesondere ist dabei von Vorteil, wenn eine Anzahl von 16 Mischorganen 9 bei einer Umfangsgeschwindigkeit von 6 m/s und eine Anzahl von 4 Mischorganen 9 bei einer Umfangsgeschwindigkeit von 10 m/s der Mischstreckenwelle 10 angeordnet werden, wobei diese Angaben als untere und obere Grenze eines Bereichs für die Anzahl an Mischorganen 9 in Bezug auf die Umfangsgeschwindigkeit der Mischstreckenwelle 10 zu verstehen sind.

Es sei in diesem Zusammenhang nochmals darauf hingewiesen, dass insbesondere für die erste Mischstrecke 3, aber auch für die zweite Mischstrecke 4, Kombinationen aus verschiedenen Typen von Mischorganen 9 verwendet werden können, beispielsweise fünf Statorstäbe und vier Paddel-Stäbe als Rotor. Es kann generell eine Kombination aus Stator- und Rotorstäben in den Mischstrecken 3, 4 verwendet werden.

Für einen Mengenstrom zwischen 5 kg/min, insbesondere 15 kg/min, und 50 kg/min, insbesondere 35 kg/min, an den pulverförmigen Bestandteilen zur Herstellung des Slurry, wird ein Wasservolumen zwischen 150 l/h, insbesondere 300 l/h und 1000 l/h, insbesondere 500 l/h, der ersten Mischstrecke 3 zugeführt. Dabei konnte wiederum eine Wechselwirkung mit der Anzahl der Mischorgane 9 in der ersten Mischstrecke 3 im Hinblick auf die Produkteigenschaften des Mineralschaums 2 beobachtet werden. Insbesondere von Vorteil ist, wenn bei einer Anzahl von 6 Mischorganen 9 ein Volumenstrom von 250 l/h Wasser und bei einer Anzahl von 18 Mischorganen 9 ein Volumenstrom von 800 l/h Wasser den pulverförmigen Bestandteilen der Formulierung zur Herstellung des Slurry zugesetzt wird, wobei auch diese Angaben wieder als untere und obere Grenze eines Bereichs für die Anzahl an Mischorganen 9 in Bezug auf den Wasser-Volumenstrom zu verstehen sind.

Für die Zugabe des Wassers zu den pulverförmigen Komponenten in der ersten Mischstrecke 3 ist es von Vorteil, wenn das Wasser verteilt über mehrere Bereiche der Mischstrecke 3 zugeführt wird, insbesondere über Sprühdüsen. Z.B. können über den Umfang der ersten Mischstrecke 3 verteilt zwischen 2 und 10, insbesondere zwischen 3 und 6, Sprühdüsen angeordnet sein.

Vorzugsweise werden pro Mengenanteil pulverförmige Formulierung zwischen 30 und 60 Volumenanteile Schaumkomponente aus dem Schaumgenerator 11 in die zweite Mischstrecke 4 aufgegeben, insbesondere zwischen 40 und 50 Volumenanteile Schaumkomponente. Für 100 g pulverförmige Formulierung werden 5 g bis 10 g Schaumkomponente zugesetzt.

Vorzugsweise hat die Schaumkomponente eine Dichte ausgewählt aus einem Bereich mit einer unteren Grenze von 35 kg/m³ und einer oberen Grenze von 60 kg/m³.

Die Umfangsgeschwindigkeit, mit der die zweite Mischstrecke 4 betrieben wird, ist vorzugsweise bei dem voranstehend angegebenen Produktionsvolumen und in Hinblick auf den Volumenstrom an zugesetzter Schaumkomponente, kleiner als jene der ersten Mischstrecke 3. Die Mischorgane der zweiten Mischstrecke 4 sind dabei so angeordnet, dass eine homogene Vermengung innerhalb der Mischstrecke 4 zwischen dem Slurry und der Schaumkomponente erfolgt und die Schaumkomponente schonend mit dem Slurry vermischt wird.

Es kann mit der erfindungsgemäßen Vorrichtung 1 und dem erfindungsgemäßen Verfahren ein Mineralschaums 2 hergestellt werden, der ein Raumgewicht von max. 300 kg/m³ aufweist, insbesondere ein Raumgewicht zwischen 100 kg/m³ und 250 kg/m³. Dabei bezieht sich diese Angabe auf den vollständig getrockneten Mineralschaum 2. Das Raumgewicht kann beispielsweise auch über die Dichten des Slurry und der Schaumkomponente eingestellt werden.

Die Formulierung, aus der der Slurry in der ersten Mischstrecke 3 hergestellt wird, besteht im einfachsten Fall aus einem Calzium-Sulfat-Aluminat-Zement (CAS, Sulfo-Aluminat-Zement, 4CaO.3Al₂O₃.SO₃), einer Sulfatkomponente, einem Aluminiumsilikat sowie einer Calciumoxid bereitstellende Komponente. Der Calzium-Sulfat-Aluminat-Zement ist dabei in einem Anteil in der Formulierung enthalten, der ausgewählt aus einem Bereich von 55 Gewichtsteilen und 85 Gewichtsteilen. Vorzugsweise ist der Anteil des Calzium-Sulfat-Aluminat-Zements mindestens 60 Gewichtsteile, insbesondere mindestens 70 Gewichtsteile. Die Sulfatkomponente, d.h. der Sulfatträger, ist in einem Anteil in der Formulierung enthalten, dass ein freier Sulfatanteil der Formulierung zwischen 5 Gewichtsteilen und 15 Gewichtsteilen, insbesondere zwischen 7 Gewichtsteilen und 12 Gewichtsteilen, beträgt. Das Alumniumsilikat ist in einem Anteil in der Formulierung enthalten, dass der freie Al₂O₃ - Anteil zwischen 3 Gewichtsteilen und 30 Gewichtsteilen, insbesondere zwischen 4 Gewichtsteilen und 20 Gewichtsteilen, beträgt. Die Calciumoxid bereitstellende Komponente, d.h. der Calziumoxidträger ist in einem Anteil enthalten ist, dass der freie CaO-Anteil zwischen 0,5 Gewichtsteilen und 2 Gewichtsteilen, insbesondere zwischen 0,7 Gewichtsteilen und 1,2 Gewichtsteilen, beträgt.

Mit den Ausdrücken "freier Sulfatanteil", "freier Al₂O₃ - Anteil" und "freier CaO-Anteil" ist gemeint, dass dabei die jeweiligen Anteile aus dem Calzium-Sulfat-Aluminat-Zement nicht berücksichtigt werden, sondern diese Anteile aus den weiteren Inhaltsstoffen der Formulierung stammen.

Als Sulfat wird bevorzugt Calziumsulfat als Anhydrit, Dihydrat und/oder als α-Halbhydrat verwendet, es können jedoch auch andere Sulfate, wie beispielsweise ein β-Halbhydrat von Kalziumsulfat ebenso wie Magnesiumsulfat oder Natriumsulfat, verwendet werden. Gegebenenfalls sind auch Mischungen und Derivate hiervon einsetzbar. Das zugesetzte Sulfat fungiert unter anderem als Mahlhilfe für die Formulierung, insbesondere wenn diese vor der Zuführung zur ersten Mischstrecke 3 gemahlen wird, bzw. als Beschleuniger während der Abbindung. Zudem verbessert es die Grünstandfestigkeit der Slurry/Schaum Mischung.

Das Alumniumsilikat ist bevorzugt ein alkalisch aktivierbares Aluminiumsilikat, insbesondere ein vulkanisches Aluminiumsilikat, vorzugsweise Basalt, Pechstein, Obsidian, Phonolith, und/oder Metakaolin, sowie Mischungen und Derivate daraus. Zur weiteren Verbesserung wird vorzugsweise ein Basalt verwendet, der einen Gehalt an Zeolith und/oder einem Puzzolan aufweist. Der Gehalt an Zeolith und/oder Puzzolan kann dabei bis zu 40 Gew.-% betragen, insbesondere bis zu 30 Gew.-%.

Die pulverförmigen Bestandteile der Formulierung, also der Sulfat-Aluminat-Zement, die Sulfatkomponente, das Aluminiumsilikat sowie die Calciumoxid bereitstellende Komponente, weisen in der Hauptmenge bevorzugt eine Teilchengröße von bis zu 40 µm, insbesondere bis zu 25 µm, und maximal 17 % größere Teilchen auf. Durch die Einhaltung dieses Mahlgrades der pulverförmigen Hauptbestandteile der Formulierung kann die Herstellung des Slurrys verbessert werden, insbesondere kann damit auch positiv auf die Porigkeit und den Volumenanteil der Poren im Mineralschaum 2 Einfluss genommen werden.

Neben diesen Hauptbestandteilen der Formulierung, das heißt dem Sulfat-Aluminat-Zement, der Sulfatkomponente, dem Aluminiumsilikat sowie der Calciumoxid bereitstellende Komponente, besteht im Rahmen der Erfindung die Möglichkeit, dass dieser Formulierung weitere, insbesondere pulverförmige, Zusatzstoffe und Hilfsstoffe beigemengt werden, wobei jedoch in der bevorzugten Ausführungsvariante diese Formulierung keine nicht reaktiven Füllstoffe enthält, also sämtliche Bestandteile reaktiv sind.

Die Formulierung kann weiters, insbesondere zur Reduktion des Wasseranteils, zumindest einen Hochleistungsverflüssiger in einem Anteil von maximal 1 Gewichtsanteil enthalten, wobei bevorzugt dieser Hochleistungsverflüssiger ein Polycarboxylatether ist.

Des Weiteren kann der Formulierung zumindest ein Verdickungsmittel in einem Gewichtsanteil von max. 0,5 Gewichtsteilen zugesetzt sein, wobei dieses Verdickungsmittel bevorzugt ausgewählt ist aus einer Gruppe umfassend Hydroxymethylpropylcellulose, Methylhydroxyethylcellulose, sowie Mischungen und Derivate daraus.

Gemäß einer bevorzugten Ausführungsvariante beträgt der Anteil des Verdickungsmittels maximal 70 % des Anteils des Hochleistungsverflüssigers.

Weiters können die Rheologie verbessernde Hilfsmittel, wie z.B. Mittel zur Reduktion der Viskosität, zugesetzt werden, um ein Absinken der Festkomponenten im Slurry zu vermeiden.

Zur Vermeidung von Wiederholungen sei an dieser Stelle angemerkt, dass generell auch auf voranstehende Ausführungen bezüglich der einzelnen Komponenten der Formulierung bzw. des Slurry, der Schaumkomponente oder der Slurry/Schaumkomponente Mischung verwiesen sei.

Weitere Verarbeitungshilfsstoffe sind Alkalikarbonate, wie z.B. Li₂CO₃, Alkalisulfate, Fruchtsäuren, wie z.B. Zitronensäure, oder Weinsäure, die jeweils in einem Anteil von bis zu 2 Gewichtsteilen enthalten sein können.

Bevorzugt weist die Formulierung auch ein Hydrophobierungsmittel auf in einem Anteil von maximal 1 Gewichtsteile, um damit die Wasseraufnahme des fertigen Mineralschaums 2 zu reduzieren, sodass damit auch eine geringere Reduktion des Wärmedämmverhaltens, das heißt der Wärmeleitfähigkeit, durch Wasseraufnahme erreicht werden kann.

Der Schaumkomponente kann zur Verbesserung der Standzeit des Schaums auch ein oberflächenaktives Mittel, d.h. ein die Oberflächenspannung herabsetzendes Mittel, beigemengt werden, wobei dessen Anteil an der Schaumkomponente vorzugsweise maximal 10 Gewichtsteile beträgt.

Es können auch aus dem Stand der Technik bekannte Netzmittel, insbesondere in einem Anteil bis 0,2 Gewichtsteile, und hochviskose Stabilisatoren, insbesondere in einem Anteil bis 0,02 Gewichtsteile, der Schaumkomponente zugesetzt werden, um die Vermischung mit dem Slurry zu verbessern.

Der nach dem erfindungsgemäßen Verfahren hergestellte Mineralschaum 2 weist Poren auf, die einen Durchmesser von maximal 1 mm aufweisen und in einem Anteil am Dämmstoff von 80 % vorhanden sein können.

Im Zuge von durchgeführten Tests wurden folgende beispielhaft angegebene Zusammensetzungen der erfindungsgemäßen Formulierung für den Slurry gemäß Tabelle 1 hergestellt. Dabei wurde als Sulfat Anhydrit eingesetzt. Die Schaumkomponente wurde entsprechend den Angaben in Tabelle 2 zusammengesetzt, wobei als Protein hydrolysiertes Keratin verwendet wurde. Die Slurry/Schaum Zusammensetzungen wurden entsprechend voranstehenden Ausführungen hergestellt.

Es sei angemerkt, dass im Rahmen der Erfindung auch Zusammensetzungen mit den anderen voranstehend genannten Stoffen hergestellt wurden.

**Tabelle 1: Slurryzusammensetzung in Gewichtsteilen**

| Nr. | CAS-Klinker | Sulfatkomponente | Basalt | Ca(OH)₂ | Hilfsstoffe | Wasser |
|---|---|---|---|---|---|---|
| 1 | 55 | 5 | 10 | 0,5 | 0,52 | 35 |
| 2 | 55 | 10 | 10 | 0,65 | 0,52 | 35 |
| 3 | 55 | 8 | 12 | 0,65 | 0,55 | 25 |
| 4 | 55 | 8 | 15 | 0,8 | 0,55 | 35 |
| 5 | 60 | 8 | 15 | 1,2 | 0,61 | 35 |
| 6 | 70 | 10 | 20 | 1 | 0,82 | 30 |
| 7 | 80 | 10 | 20 | 1,5 | 0,75 | 30 |
| 8 | 80 | 15 | 20 | 1,43 | 0,65 | 30 |
| 9 | 80 | 12 | 20 | 1,32 | 0,64 | 25 |
| 10 | 80 | 10 | 15 | 1,45 | 0,75 | 25 |

**Tabelle 2: Schaumzusammensetzung in Gewichtsteilen**

| Nr. | Protein | Wasser | Hilfsstoffe |
|---|---|---|---|
| 1 | 1 | 60 | 0 |
| 2 | 1 | 55 | 0,2 |
| 3 | 1 | 50 | 0,2 |
| 4 | 1 | 45 | 0,2 |
| 5 | 1 | 40 | 0,2 |
| 6 | 2 | 60 | 0,2 |
| 7 | 2 | 40 | 0,2 |
| 8 | 2 | 20 | 0,5 |
| 9 | 3 | 60 | 0,5 |
| 10 | 3 | 50 | 0,5 |

Eine bevorzugte Zusammensetzung der Formulierung zur Herstellung des Mineralschaums 2 besteht aus 65 Gewichtsteilen bis 75 Gewichtsteilen, insbesondere 70 Gewichtsteilen, Calzium-Sulfat-Aluminat-Zementklinker, 5 Gewichtsteilen bis 15 Gewichtsteilen, insbesondere 10 Gewichtsteilen, Anhydrit, 15 Gewichtsteilen bis 25 Gewichtsteilen, insbesondere 20 Gewichtsteilen, kalziniertem Aluminiumsilikat, insbesondere Basalt, 0,5 Gewichtsteilen bis 1,5 Gewichtsteilen, insbesondere 1 Gewichtsteil, Calziumhydroxid, 0,25 Gewichtsteilen bis 0,75 Gewichtsteilen, insbesondere 0,5 Gewichtsteilen Lithiumcarbonat, 0,01 Gewichtsteilen bis 0,03 Gewichtsteilen, insbesondere 0,01 Gewichtsteilen, 0,15 Gewichtsteilen bis 0,45 Gewichtsteilen, insbesondere 0,3 Gewichtsteilen, Polycarboxylatether und 0,01 Gewichtsteilen bis 0,03 Gewichtsteilen, insbesondere 0,02 Gewichtsteilen, Methylcellulose.

Dieser Formulierung wird zur Bildung des Slurry zwischen 20 Gewichtsteilen und 40 Gewichtsteilen Wasser zugesetzt.

Dem fertigen Slurry werden zwischen 40 Gewichtsteilen und 60 Gewichtsteilen Schaumkomponente zugesetzt. Die Schaumkomponente besteht neben dem Schaum aus einem Vernetzer, wobei der Vernetzer in einem Anteil zwischen 1 Gewichtsanteil und 3 Gewichtsanteilen, insbesondere 1,5 Gewichtsanteilen, bezogen auf den Gewichtsanteil des hydraulischen Bindemittels in der Formulierung, enthalten ist. Die Schaumkomponente hat eine Dichte zwischen 40 kg/m³ und 60 kg/m³, insbesondere 50 kg/m³.

Bezüglich der verwendeten Hilfsstoffe sei auf voranstehende Ausführungen verwiesen.

Ergänzend sei darauf hingewiesen, dass die Zugabe der Schaumkomponente zum Slurry neben der beschriebenen und bevorzugten kontinuierlichen Verfahrensweise auch diskontinuierlich erfolgen kann.

Der Ordnung halber sei abschließend darauf hingewiesen, dass zum besseren Verständnis des Aufbaus der Vorrichtung 1 diese bzw. deren Bestandteile teilweise unmaßstäblich und/oder vergrößert und/oder verkleinert dargestellt wurden.

### Bezugszeichenaufstellung

- 1: Vorrichtung
- 2: Mineralschaum
- 3: Mischstrecke
- 4: Mischstrecke
- 5: Vorratsbehälter

- 6: Fördervorrichtung
- 7: Pfeil
- 8: Pfeil
- 9: Mischorgan
- 10: Mischstreckenwelle

- 11: Schaumgenerator
- 12: Protein
- 13: Vorratsbehälter
- 14: Pfeil
- 15: Pfeil

- 16: Vorratsbehälter
- 17: Pfeil
- 18: Pfeil
- 19: Fördereinrichtung
- 20: Fördereinrichtung

## Patentansprüche

1. Formulierung zur Herstellung eines brandhemmenden Mineralschaums umfassend einen Calzium-Sulfat-Aluminat-Zement, zumindest eine Sulfatkomponente, zumindest ein Aluminiumsilikat sowie zumindest eine Calciumoxid bereitstellende Komponente, **dadurch gekennzeichnet, dass** der Calzium-Sulfat-Aluminat-Zement in einem Anteil ausgewählt aus einem Bereich von 55 Gewichtsteilen und 85 Gewichtsteilen enthalten ist, die Sulfatkomponente in einem Anteil enthalten ist, dass ein Sulfatanteil zwischen 5 Gewichtsteilen und 15 Gewichtsteilen beträgt, das Aluminiumsilikat in einem Anteil enthalten ist, dass der Al₂O₃ - Anteil zwischen 3 Gewichtsteilen und 30 Gewichtsteilen beträgt, und die Calciumoxid bereitstellende Komponente in einem Anteil enthalten ist, dass der CaO-Anteil zwischen 0,5 Gewichtsteilen und 2 Gewichtsteilen beträgt.

2. Formulierung nach Anspruch 1, **dadurch gekennzeichnet, dass** die Sulfatkomponente ausgewählt ist aus einer Gruppe umfassend Calziumsulfat, α- oder β- Halbhydrat oder Dihydrat von Calziumsulfat, Anhydrit, Natriumsulfat, Eisen-(II)-sulfat, Magnesiumsulfat sowie Mischungen und Derivate daraus.

3. Formulierung nach Anspruch 1 oder 2, **dadurch gekennzeichnet, dass** das Aluminiumsilikat ein alkalisch aktivierbares Aluminiumsilikat ist, insbesondere ein vulkanisches Aluminiumsilikat, und/oder Metakaolin, sowie Mischungen und Derivate daraus.

4. Formulierung nach einem der Ansprüche 1 bis 3, **dadurch gekennzeichnet, dass** das Aluminiumsilikat kalziniert ist.

5. Formulierung nach einem der Ansprüche 1 bis 4, **dadurch gekennzeichnet, dass** die Calciumoxid bereitstellende Komponente ausgewählt ist aus einer Gruppe umfassend Calziumoxid, Calziumcarbonat und Calziumhydroxid, sowie Mischungen daraus.

6. Formulierung nach einem der Ansprüche 1 bis 5, **dadurch gekennzeichnet, dass** diese zumindest einen Polycarboxylatether oder ein Derivat davon als Hochleitstungsverflüssiger in einem Anteil von maximal 3 Gewichtsteilen enthält.

7. Formulierung nach einem der Ansprüche 1 bis 6, **dadurch gekennzeichnet, dass** diese zumindest ein Verdickungsmittel ausgewählt ist aus einer Gruppe umfassend Hydroxymethylpropylcellulose, Methylhydroxyethylcellulose, sowie Mischungen und Derivate daraus in einem Anteil von maximal 0,5 Gewichtsteilen enthält.

8. Formulierung nach Anspruch 7, **dadurch gekennzeichnet, dass** der Anteil des Verdickungsmittels maximal 70 % des Anteils des Hochleistungsverflüssigers beträgt.

9. Formulierung nach einem der Ansprüche 1 bis 8, **dadurch gekennzeichnet, dass** diese faserfrei ist.

10. Formulierung nach einem der Ansprüche 1 bis 9, **dadurch gekennzeichnet, dass** zumindest ein Stoff aus einer Gruppe umfassend Alkalikarbonate, Alkalisulfate, Fruchtsäuren, enthalten ist.

11. Formulierung nach einem der Ansprüche 1 bis 10, **dadurch gekennzeichnet, dass** diese füllstofffrei ist.

12. Poren aufweisender Mineralschaum (2) umfassend eine hydraulisch abbindende Komponente und eine Schaumkomponente, **dadurch gekennzeichnet, dass** die hydraulisch abbindende Komponente aus einer Formulierung entsprechend einem der vorhergehenden Ansprüche gebildet ist.

13. Mineralschaum (2) nach Anspruch 12, **dadurch gekennzeichnet, dass** die Schaumkomponente durch einen Proteinschaum und/oder einen Tensidschaum gebildet ist.

14. Mineralschaum (2) nach Anspruch 12 oder 13, **dadurch gekennzeichnet, dass** pro Anteil Formulierung zwischen 30 und 60 Anteile Schaumkomponente enthalten sind.

15. Mineralschaum (2) nach einem der Ansprüche 12 bis 14, **dadurch gekennzeichnet, dass** die Schaumkomponente ein oberflächenaktives Mittel ausgewählt ist aus einer Gruppe umfassend Fettsäuren und Alkylsulfonate sowie Derivate davon und Mischung daraus enthält.

16. Mineralschaum (2) nach einem der Ansprüche 12 bis 15, **dadurch gekennzeichnet, dass** die Schaumkomponente ein pflanzliches Eiweiß als Vernetzer enthält.

17. Mineralschaum (2) nach Anspruch 16, **dadurch gekennzeichnet, dass** der Vernetzer in einem Anteil zwischen 1 % und 3 % des Gewichts der hydraulisch abbindenden Komponente am Mineralschaum enthalten ist.

18. Mineralschaum (2) nach einem der Ansprüche 12 bis 17, **dadurch gekennzeichnet, dass** ein Anteil der Poren zumindest 70 % beträgt.

19. Mineralschaum (2) nach einem der Ansprüche 12 bis 18, **dadurch gekennzeichnet, dass** die Poren einen Durchmesser von maximal 0,5 mm aufweisen.

20. Bauelement mit einem Bauelementkörper, **dadurch gekennzeichnet, dass** der Bauelementkörper oder an einer Oberfläche des Bauelementkörpers und/oder innerhalb des Bauelementkörpers ein Mineralschaum (2) entsprechend einem der Ansprüche 12 bis 19 angeordnet ist.

21. Verfahren zur Herstellung eines selbsthärtenden Mineralschaums (2) nach dem pulverförmige Bestandteile zur Herstellung einer Formulierung in einer ersten Mischstrecke (3) zu einem Gemenge miteinander vermischt werden und diesem Gemenge Wasser zur Bildung eines Slurry zugesetzt wird, **dadurch gekennzeichnet, dass** die Formulierung entsprechend einem der Ansprüche 1 bis 11 zusammengesetzt wird und dem Slurry in einer zweiten Mischstrecke (4) eine Schaumkomponente zugesetzt und in den Slurry eingemischt wird, und danach der Mineralschaum (2) erhärtet wird.

22. Verfahren nach Anspruch 21, **dadurch gekennzeichnet, dass** pro Anteil Formulierung zwischen 30 und 60 Anteile Schaumkomponente zugegeben werden.

## Claims

1. A formulation for the production of a flame-retardant mineral foam comprising a calcium sulphate aluminate cement, at least one sulphate component, at least one aluminium silicate as well as at least one calcium oxide-providing component, **characterized in that** the calcium sulphate aluminate cement is incorporated in a proportion selected from a range of 55 parts by weight to 85 parts by weight, the sulphate component is incorporated in a proportion which amounts to a sulphate fraction of between 5 parts by weight and 15 parts by weight, the aluminium silicate is incorporated in a proportion such that the proportion of Al₂O₃ is between 3 parts by weight and 30 parts by weight, and the calcium oxide-providing component is contained in a proportion such that the proportion of CaO is between 0.5 parts by weight and 2 parts by weight.

2. The formulation as claimed in claim 1, **characterized in that** the sulphate component is selected from a group comprising calcium sulphate, α- or β- hemihydrate or dihydrate of calcium sulphate, anhydrite, sodium sulphate, iron (II) sulphate or magnesium sulphate, as well as mixtures and derivatives thereof.

3. The formulation as claimed in claim 1 or claim 2, **characterized in that** the aluminium silicate is an alkali-activatable aluminium silicate, in particular an igneous aluminium silicate, and/or metakaolin, as well as mixtures and derivatives thereof.

4. The formulation as claimed in one of claims 1 to 3, **characterized in that** the aluminium silicate is calcined.

5. The formulation as claimed in one of claims 1 to 4, **characterized in that** the calcium oxide-providing component is selected from a group comprising calcium oxide, calcium carbonate and calcium hydroxide, as well as mixtures thereof.

6. The formulation as claimed in one of claims 1 to 5, **characterized in that** it contains at least one polycarboxylate ether or a derivative thereof as a high-performance plasticizer in a maximum proportion of 3 parts by weight.

7. The formulation as claimed in one of claims 1 to 6, **characterized in that** it contains at least one thickening agent selected from a group comprising hydroxymethylpropylcellulose, methylhydroxyethylcellulose as well as mixtures and derivatives thereof, in a maximum proportion of 0.5 parts by weight.

8. The formulation as claimed in claim 7, **characterized in that** the maximum proportion of thickening agent is 70% of the proportion of high-performance plasticizer.

9. The formulation as claimed in one of claims 1 to 8, **characterized in that** it is free from fibrous.

10. The formulation as claimed in one of claims 1 to 9, **characterized in that** it contains at least one substance from a group comprising alkali carbonates, alkali sulphates and fruit acids.

11. The formulation as claimed in one of claims 1 to 10, **characterized in that** it is free from fillers.

12. A porous mineral foam (2) comprising a hydraulic setting component and a foam component, **characterized in that** the hydraulic setting component is formed from a formulation in accordance with one of the preceding claims.

13. The mineral foam (2) as claimed in claim 12, **characterized in that** the foam component is formed by a protein foam and/or a surfactant foam.

14. The mineral foam (2) as claimed in claim 12 or claim 13, **characterized in that** it contains between 30 and 60 parts of foam component per part of formulation.

15. The mineral foam (2) as claimed in one of claims 12 to 14, **characterized in that** the foam component is a surfactant agent selected from a group comprising fatty acids and alkyl sulphonates as well as derivatives thereof and mixtures thereof.

16. The mineral foam (2) as claimed in one of claims 12 to 15, **characterized in that** the foam component contains a vegetable protein as a curing agent.

17. The mineral foam (2) as claimed in claim 16, **characterized in that** the curing agent is present in the mineral foam in a proportion of between 1% and 3% of the weight of the hydraulic setting component.

18. The mineral foam (2) as claimed in one of claims 12 to 17, **characterized in that** the porosity is at least 70%.

19. The mineral foam (2) as claimed in one of claims 12 to 18, **characterized in that** the pores have a maximum diameter of 0.5 mm.

20. A structural element with a structural element body, **characterized in that** a mineral foam (2) in accordance with one of claims 12 to 19 is the structural element body or is on a surface of the structural element body and/or is within the structural element body.

21. A method for the production of a self-curing mineral foam (2) according to which powdered components are mixed in order to produce a formulation in a first mixing section (3) to form a batch and adding water to this batch in order to form a slurry, **characterized in that** the formulation is composed in accordance with one of claims 1 to 11 and a foam component is added to the slurry in a second mixing section (4) and mixed into the slurry, and the mineral foam (2) is subsequently cured.

22. The method as claimed in claim 21, **characterized in that** between 30 and 60 parts of foam component are added per part of formulation.

## Revendications

1. Formulation pour la fabrication d'une mousse minérale retardatrice de flamme, comprenant un ciment de calcium-sulfate-aluminate, au moins un composant sulfate, au moins un silicate d'aluminium ainsi qu'au moins un composant fournisseur d'oxyde de calcium, **caractérisée en ce que** le ciment de calcium-sulfate-aluminate est présent en une proportion choisie dans la plage de 55 parties en poids à 85 parties en poids, le composant sulfate est présent en une proportion telle que la proportion du sulfate soit comprise entre 5 parties en poids et 15 parties en poids, le silicate d'aluminium est présent en une proportion telle que la proportion d'Al₂O₃ soit comprise entre 3 parties en poids et 30 parties en poids, et le composant fournisseur d'oxyde de calcium est présent en une proportion telle que la proportion de CaO soit comprise entre 0,5 partie en poids et 2 parties en poids.

2. Formulation selon la revendication 1, **caractérisée en ce que** le composants sulfate est choisi dans un groupe comprenant du sulfate de calcium, de l'α- ou β-semi-hydrate ou dihydrate de sulfate de calcium, de l'anhydrite, du sulfate de sodium, du sulfate de fer (II), du sulfate de magnésium, ainsi que des mélanges et des dérivés de ceux-ci.

3. Formulation selon la revendication 1 ou 2, **caractérisée en ce que** le silicate d'aluminium est un silicate d'aluminium activable par alcalin, en particulier du silicate d'aluminium volcanique et/ou du métakaolin, ainsi que des mélanges et des dérivés de ceux-ci.

4. Formulation selon l'une quelconque des revendications 1 à 3, **caractérisée en ce que** le silicate d'aluminium est calciné.

5. Formulation selon l'une quelconque des revendications 1 à 4, **caractérisée en ce que** le composant fournisseur d'oxyde de calcium est choisi dans un groupe comprenant l'oxyde de calcium, le carbonate de calcium et l'hydroxyde de calcium, ainsi que des mélanges de ceux-ci.

6. Formulation selon l'une quelconque des revendications 1 à 5, **caractérisée en ce que** celle-ci comprend au moins un éther de polycarboxylate ou un dérivé de celui-ci en tant que fluidifiant haute performance, dans une proportion maximum de 3 parties en poids.

7. Formulation selon l'une quelconque des revendications 1 à 6, **caractérisée en ce que** celle-ci comprend au moins un agent épaississant choisi dans un groupe comprenant de l'hydroxyméthylpropylcellulose, de la méthylhydroxyéthylcellulose, ainsi que des mélanges et dérivés de ceux-ci, dans une proportion d'au plus 0,5 partie en poids.

8. Formulation selon la revendication 7, **caractérisée en ce que** la proportion de l'agent épaississant est au maximum de 70 % de la proportion de fluidifiant haute performance.

9. Formulation selon l'une quelconque des revendications 1 à 8, **caractérisée en ce que** celle-ci est exempte de fibre.

10. Formulation selon l'une quelconque des revendications 1 à 9, **caractérisée en ce qu'**au moins une substance du groupe comprenant des carbonates alcalins, des sulfates alcalins et des acides de fruit est incluse.

11. Formulation selon l'une quelconque des revendications 1 à 10, **caractérisé en ce que** celle-ci est exempte de charge.

12. Mousse minérale présentant des pores (2), comprenant un composant à prise hydraulique et un composant de mousse, **caractérisée en ce que** le composant à prise hydraulique est formé à partir d'une formulation selon l'une quelconque des revendications précédentes.

13. Mousse minérale (2) selon la revendication 12, **caractérisée en ce que** le composant de mousse est formé par une mousse protéinique et/ou une mousse de tensio-actif.

14. Mousse minérale (2) selon la revendication 12 ou 13, **caractérisée en ce que** par part de formulation sont incluses entre 30 et 60 parts du composant de mousse.

15. Mousse minérale (2) selon l'une quelconque des revendications 12 à 14, **caractérisée en ce que** le composant de mousse est un agent tensioactif choisi dans un groupe comprenant des acides gras et des alkysulfonates, ainsi que de dérivés et des mélanges de ceux-ci.

16. Mousse minérale (2) selon l'une quelconque des revendications 12 à 15, **caractérisée en ce que** le composant de mousse contient de l'albumine végétale comme réticulant.

17. Mousse minérale (2) selon la revendication 16, **caractérisée en ce que** le réticulant est inclus dans la mousse minérale dans une proportion comprise entre 1 % et 3 % en poids du composant à prise hydraulique.

18. Mousse minérale (2) selon l'une quelconque des revendications 12 à 17, **caractérisé en ce qu'**une proportion des pores est d'au moins 70 %.

19. Mousse minérale (2) selon l'une quelconque des revendications 12 à 18, **caractérisée en ce que** les pores présentent un diamètre d'au plus 0,5 mm.

20. Element de construction avec un corps d'élément de construction, **caractérisé en ce qu'**une mousse minérale (2) selon l'une quelconque des revendications 12 à 19 est prévue au niveau du corps d'élément de construction ou d'une surface supérieure du corps d'élément de construction et/ou à l'intérieur du corps d'élément de construction.

21. Procédé pour la fabrication d'une mousse minérale auto-durcissante (2), selon lequel des ingrédients sous forme de poudre pour la préparation d'une formulation dans un premier tronçon de mélange (3) sont mélangés ensemble pour obtenir un mélange, et de l'eau est ajoutée à ce mélange pour la formation d'une suspension, **caractérisé en ce que** la formulation selon l'une quelconque des revendications 1 à 11 va être formée, et un composant de mousse va être ajouté à la suspension dans un second tronçon de mélange (4) et mélangé à la suspension, et par la suite la mousse minérale (2) va se solidifier.

22. Procédé selon la revendication 21, **caractérisé en ce que** par part de formulation, entre 30 et 60 parts de composant de mousse sont ajoutées.
